# EUROPEAN PATENT SPECIFICATION

(11) **EP 1 743 044 B1**
(45) Date of publication and mention of the grant of the patent: **07.11.2007**
(21) Application number: 05733618.2
(22) Date of filing: 12.04.2005
(51) Int. Cl.: C22B 11/00, C22B 7/00, C22B 3/20

(54) **METHOD FOR RECOVERY OF PALLADIUM**
VERFAHREN ZUR RÜCKGEWINNUNG VON PALLADIUM
PROCEDE DE RECUPERATION DE PALLADIUM

(30) Priority: 14.04.2004 IT PD20040096
(43) Date of publication of application: 17.01.2007
(73) Proprietor: UNIVERSITA DEGLI STUDI DI CAGLIARI, 90124 Cagliari CA (IT); Universita'Degli Studi di Trieste, I-34127 Trieste (IT)
(72) Inventor: DEPLANO, Paola, I-09125 Cagliari (IT); MERCURI, Maria, Laura, I-09131 Cagliari (IT); TROGU, Emanuele, Filiberto, I-09045 Quartu Sant'Elena (IT); SERPE, Angela, I-09048 Sinnai (IT); FORNASIERO, Paolo, I-34127 Trieste (IT); GRAZIANI, Mauro, I-34126 Trieste (IT)
(74) Representative: Gervasi, Gemma
(86) International application number: PCT/EP2005/051607
(87) International publication number: WO 2005/100621

(56) References cited:
- US-A1- 2001 050 303
- VANZI M. ET AL.: "Gold removal in Failure Analysis of GaAs-based laser diodes" MICROELECTRONICS RELIABILITY, no. 39, 1999, pages 1043-1047, XP002336855 cited in the application
- CAU L. ET AL.: "New powerful reagents based on dihalogen/N,N'-dimethyl-perhydrodiazepine- 2,3-dithione adducts for gold dissolution: the IBr case" DALTON TRANS., 2003, pages 1969-1974, XP002336856 cited in the application

## Description

### Field of the invention

The method concerns recovery of palladium, in particular from composite materials of spent catalytic converters.

### State of the art

The increasing use of noble metals both in the automotive industry, mainly in exhaust systems due to their catalytic properties, and in microelectronics, thanks to their particular chemical-physical properties (conduction etc.) poses the problem of their recovery. The need to recover these metals is linked essentially to their potential toxicity, environmental impact and scarcity of natural sources with consequent high incidence on their cost. All these factors taken together determine a considerable interest in safe industrial processes with low environmental impact for the recovery of these noble metals. Palladium is mainly used in catalytic converters. It is present in combination with other noble metals, such as platinum and rhodium in small quantities, deposited on aluminium oxide and/or on various oxides of rare-earth metals (such as ceria, zirconia and/or their combination also appropriately doped with transition ions). In the last 20 years catalytic converters containing increasing quantities of palladium have been introduced into the automotive industry to reduce the problem of negative impact on the environment of the contaminating emissions of motor vehicles. In this context it is estimated that shortly a significant quantity of these converters will have to be disposed of, in view of the fact that the automotive industry produces approximately 40 million new cars per year and that the catalytic efficiency of these converters is estimated to be roughly 120 thousand km per motor vehicle. It is therefore obvious that these spent converters can in turn, if not appropriately disposed of, become a potential source of pollution. Recent European Community directives aimed at protecting the environment impose the prevention of waste by recycling discarded materials (91/1 56/EC on waste implemented in Italy by the "Ronchi Decree" D.L. 97/no.22) and in particular require that by 1st January 2006 all motor vehicles must be 85% weight recycled at the end of their life (2000/53/EC).

Three-way catalytic converters operate by converting the polluting exhaust gases (carbon monoxide, nitrogen oxides and unburnt petrol) into non-toxic emissions such as water, nitrogen and carbon dioxide via a ceramic monolith containing in a wash-coat as catalytic centres noble metals, nowadays mainly palladium and to a lesser extent platinum and rhodium. In fact, the palladium, platinum and rhodium noble metal content has changed in the course of time with a substantial increase in the palladium content with respect to platinum and rhodium (for example many car manufacturers used ratios of 2:4:1 in 1997 compared to 28:1:1 in 2000).

Dissolution of the palladium contained in these ceramic monoliths consisting for the most part of complex systems/composite materials, for example Pd_{(0.7% w/w} /Al₂O₃ or Pd_{(0.7% w/w}/Ce_{0.6}Zr_{0.4}O_{2 (10% w/w}/Al₂O₃ or Pd_{(2.8% w/w}/ Ce_{0.6}Zr_{0.4}O_{2 (10% w/w} )/Al₂O₃, is not an easily solvable technical problem. In three-way catalytic converters the palladium is present in a very small quantity with respect to the weight of the wash-coat and ceramic monolith and is highly dispersed on the surface of the support, consisting of these composite materials based on alumina and solid solutions of ceria and zirconia. The strong interaction of the palladium with the ceria/zirconia solid solution, designed to prevent sintering of the catalytic converter and therefore prolong its life, makes extraction of the palladium difficult. Furthermore, the capacity of ceria oxide based systems to easily release reticular oxygen reduces the metallic character of the palladium particles. This is particularly evident for metallic clusters with small dimensions (a few nanometers). This fact is confirmed by observation, via X-ray powder diffraction measurements, of the presence of particles of palladium oxide (PdO) alongside those of metallic Pd.

At present, generally speaking, the methods used for recovery of the palladium provide for the material containing it to be treated at high temperatures with aggressive agents such as chlorine (hereinafter indicated as pyrometallurgical chlorination) or strong acids and oxidants (hereinafter indicated as acid dissolution) or strong bases (hereinafter indicated as alkaline dissolution) and for the palladium separation from the solutions obtained by selective complexation of the other metals.

There is a lot of literature on pyrometallurgical chlorination (for a review of the topic see M.W. Ojeda, M. Del C. Ruiz, M. E. Godoy, J. B. Rivarola, Trans. Instn. Min. Metall. (Sect. C: Mineral Process. Extr. Metall.), 108, C33, 1999). In general the procedure exploits high temperature thermal treatment (450-1500 K) in a flow of highly toxic and/or aggressive gases such as Cl₂, CO, COCl₂, CCl₄, S₂Cl₂ e SOCl₂ or their mixtures. The effectiveness of this method (recovery efficiency 90-99%) is countered by the high cost and considerable environmental impact of the process and the serious risks for the operators.

A variety of procedures have been proposed by various authors for the technique of dissolution with strong acids and oxidants. However the methods, even the most recent ones, are generally based on the traditional dissolution of metals with high oxidisation potential, using strong acids (very risky for the operators) such as sulphuric acid, nitric acid or the hydrochloric/nitric acid mixture known as "aqua regia", followed by recovery of the palladium from the solution by means of selective complexing with appropriate ligands, for example caffeine, thioaniline etc. This procedure is therefore performed in two stages in which dangerous reagents are used (in addition to the acids, also the ligands used are often toxic) and furthermore has an effectiveness that depends to a large extent on the complexing capacity and selectivity of the ligand used, since the preliminary deep-etch is not selective.

US6455018 describes a complex non-selective process for extraction of metals from spent catalytic converters by means of: grinding of the catalysts, treatment with sulphuric acid; calcination of the mixture between 150 and 450°C; leaching with chlorides and hydrochloric acid obtaining a solution of noble metals and any other metals present and a solid residue.

JP2000126504 describes a selective extraction of the palladium in an ionic form with caffeine from a solution obtained after treatment of the catalysts, with hydrochloric acid, but this does not solve the problem of pre-treatment of the catalysts for palladium dissolution. Here again, moreover, with the hydrochloric acid, a non-selective dissolution of the metals contained in the exhaust system is obtained.

JP2003119032 describes a selective extraction of the palladium and/or gold with derivates of thioaniline from aqueous solutions of these noble metals obtained with hydrochloric or nitric acid.

Alkaline dissolution is also described. The patent RU2175266 describes recovery of the metals platinum and palladium from spent catalytic converters by means of pre-combustion with coke in the presence of air at 400-600°C and with alkaline solution in an autoclave at 140-200°C with various additives. The procedure is laborious, takes place at a high temperature in an autoclave and uses very caustic solutions.

Lastly, the patent RU2200131 describes extraction of palladium by pre-treatment with S-containing reagents, obtaining the palladium in an ionic form, and re-extraction with ammonium chloride/sodium carbonate.

Overall the problems emerging with recovery of palladium according to the processes described above are: i) the use of reagents, for example the chlorine and phosgene, used in the pyrometallurgical chlorination, or sulphides extremely hazardous for the environment and/or for the operators in relation to their toxicity and/or aggressiveness; ii) the need for pre-treatment in the case of dissolution with strong acids, oxidants or bases and subsequent extraction; iii) high operating temperatures.

To overcome the mentioned problems, therefore, a first aim is to make available a method for palladium recovery in a single step, avoiding pre-treatment for palladium dissolution, this usually being performed according to known techniques in extreme conditions as regards both the reagents and the temperatures used.

A second aim is to make available a method for palladium recovery with low environmental impact agents able to extract the palladium selectively and efficiently in mild conditions.

A further aim is to make available a method for palladium recovery which can be easily industrialised and with significant palladium yield.

### Summary of the invention

These and further aims are achieved by the objects of the present invention which provide a simple method for palladium recovery in a single step and in mild reaction conditions.

The present invention therefore provides a method for the palladium recovery characterised in that said palladium is dissolved and extracted with adducts of N,N'-dialkyl-perhydrodiazepine-2,3-dithione of formula (I):

[R,R'dazdt·nXY] (I)

wherein:
R and R' equal or different from each other are alkyl groups;
XY is a group where X and Y are equal to each other and are halogens or is a group where X and Y are different from each other and are interhalogens and n is equal to 1 or 2.

New adducts of formula (I) and their use as reagents for noble metals complexation are further objects of the invention.

### Brief description of the figures

FIGURE 1: X-ray powder diffraction spectrum of (1) Pd(0.7% w/w)/Al₂O₃ (2) Pd(0.7% w/w)/Ce_{0.6}Zr_{0.4}O₂(10% w/w)/Al₂O₃ e (3) Pd(2.8% w/w)/Ce_{0.6}Zr_{0.4}O₂(10% w/w)/Al₂O₃ calcinated at 1050°C for 200 hours.
FIGURE 2: Thermogravimetric analysis of the Pd(Me₂dazdt)₂l₆ in static air.

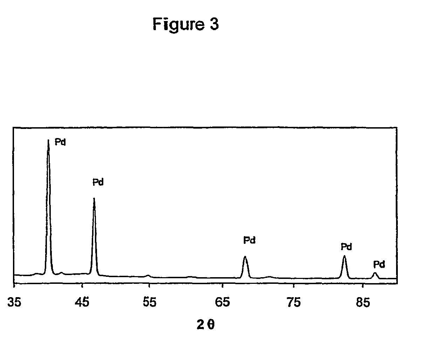

FIGURE 3: X-ray diffraction spectra of the material obtained by thermal treatment in static air up to 850°C starting from Pd(Me₂dazdt)₂l₆.
FIGURE 4: Deposits of Pd (A), X-ray of deposits of Pd (B) obtained by hydrogenation of Pd(Me₂dazdt)₂l₆.

### Detailed description of the invention

The objects of the invention will be better understood from the following description of preferred embodiments of the method and new adducts given to a non-limiting illustration of the present invention.

In the following description the word catalyst has the meaning of the nanocomposite which contains the species to be recovered (precious metals, palladium in particular) while the terminology catalytic converter has the meaning of commercial system which contains the catalyst in a protected and thermal insulated muffler mounted in each new car. The catalyst may be in various form, namely, for examples in the form of pellets or in the form of monoliths.

The method for recovery of palladium object of the present invention is characterised essentially by the use of adducts of formula (I) [R,R'dazdt·nXY], hereinafter also called reagents, obtainable by reaction of cyclic dithioxamides with halogens (X=Y) or interhalogens (X≠Y). An adduct in which R, R' are equal to - CH₃ and nXY is equal to 2I₂ developed for the first time by the Inventors has proved to be able to dissolve gold in mild conditions. In particular the Inventors have ascertained and studied the capacities of the adduct with the iodine of the N,N' - dimethyl-perhydrodiazepine - 2,3 - dithione (hereinafter identified as [Me₂dazdt2·I₂]) to remove the gold from the surface of microelectronic devices in failure analysis (Bigoli, F. et al. Chem. Commun. 2351, 1998; Vanzi, M. et al. Microelectronics Reliability 39, 1043, 1999). In cited devices based on GaAs, the gold is present as surface metallization of a triple metallic layer (Ti/Pt/Au) deposited by evaporation on the semiconductor and constitutes a uniform compact film of metal, a few microns thick, in the elementary state.

Another adduct in which R, R' are equal to -CH₃ and nXY is equal to 21Br has also proved to be able to coordinate and oxidise gold (Cau, L. et al. Dalton Trans. 1969-1974, 2003).

These adducts, and in particular [Me₂dazdt2·l₂] adduct], have surprisingly shown themselves to be able to dissolve palladium. This interesting result was neither obvious nor predictable also in view of the fact that the adduct [Me₂dazdt2·l₂] is not active vis-à-vis the noble metal most similar to palladium in terms of reactivity, i.e. platinum (Cau L. et al. 2003 ref. cit.). The even more remarkable result is that [Me₂dazdt2 · l₂] has proved to be able to dissolve the palladium finely dispersed in composite materials and in particular in the ceramic matrix that typically constitutes the wash-coat of automotive catalytic converters, a system quite different from and not comparable to the above-mentioned microelectronic devices coated in gold. The palladium contained in the catalytic converters is usually dispersed in composite materials based on ceria, zirconia and alumina and interacts significantly with the ceria/zirconia solid solution, hence it is not immediately available for the action of a complexing agent as in the case of gold deposited in the form of film on semiconductors. Cited dispersion and interaction therefore determine a technical problem for palladium recovery from these composite materials which has no obvious solution in the light of the results obtained with the gold film of electronic devices mentioned above. In particular in relation to the oxidative state in which the palladium is present in these materials, it was logical to expect that, with variation in the palladium oxidation state, the reactivity vis-à-vis of the extraction reagent would be different. These phenomena add to the phenomena of sintering of the ceramic material and inclusion of the metal caused by the thermal operating stress of the catalytic converter, which cause reduction in the surface area of the metal and in the quantity of metal exposed to etching respectively. Since the present are very complex it poses a number of serious questions concerning the efficiency, in terms of extraction yield, of any method for palladium extraction in mild conditions according to the aims of the invention.

The method for palladium recovery object of the invention is therefore based on the use of reagents of formula (I) [R,R'dazdt·nXY] in mild reaction conditions whether the palladium is present in the form of film also coupled to other metals or whether it is present finely dispersed in materials also of a composite type.

For the purposes of the invention the groups R and R', equal to or different from each other, can be appropriately modified in order to improve the selectivity and/or solubility of the reagent in polar solvents such as water and are preferably short-chain alkyls and more preferably equal to each other and selected from the group consisting of methyl, ethyl, while XY is preferably chosen from the group consisting of I₂, IBr, Icl, Br₂ and are more conveniently equal to I₂.

Cited reagents are dissolved in concentrations of no less than 1.0·10⁻³ M (preferably 2.5·10⁻³ M), according to the characteristics of the type of material from which palladium is to be recovered, in organic solvents preferably selected from the group consisting of acetone, methyl ethyl ketone (MEK), tetrahydrofuran and acetonitrile and if the palladium has to be recovered in materials in which it is finely dispersed cited solutions are mixed under agitation with the powders of cited materials previously ground to an appropriate granulometry obtaining particles preferably with a diameter no greater than 180µm. Nominal palladium content, for example of powders obtained from materials of spent devices, and reagents are at least in an almost 1:2 molar ratio. Palladium extraction can be performed at room temperature or, to reduce extraction times, at the reflux temperature of the solvent (for example 80°C for MEK and acetonitrile) for a period of no less than 72 hours and preferably up to 168 hours.

The molar ratio between nominal palladium content and reagents of formula (I) [R,R'dazdt·nXY] as well as concentrations and extraction times can be varied by an expert on the basis of normal knowledge in the sector in order to reduce the time necessary and/or improve the extraction efficiency in relation to the type of material from which the palladium has to be recovered without departing from the scope of the present invention. As an example, cited molar ratios can be equal to 1:3, while the time of 168 hours is preferable if we wish to obtain an almost quantitative extraction yield from ceramic materials of spent catalytic converters.

The separation between the solution containing the complex of the palladium with the adduct used for its dissolution can be obtained with known means suitable for separating a solid residue consisting for example of powders, also very fine, and a solution, for example by filtering on a glass microfibre filter of appropriate porosity. When this is then placed in a Soxhlet extractor it is possible to obtain an almost quantitative recovery of the complex eventually adsorbed on the catalyst powder without having to use further quantities of solvent.

At the end of the extraction phases of the metal from the catalyst, the obtained solution must be treated in order to recover the palladium in a metallic form. Cited recovery can be performed via methods known to a person skilled in the art. In particular the simplest procedure consists in recovering the solvent by distillation and thermally treating the solid residue at temperatures below 600°C, to permit combustion of the organic part contained in the palladium complex. This method, however, has the drawback of destroying the reagent which therefore cannot be recycled. Other known processes for reduction of the palladium can be used. In particular, reduction processes with for example copper, gaseous hydrogen, hydrazine.

Some examples of synthesis of adducts and their ability to complex noble metals according to the invention and the assays performed on samples of model catalysts in order to develop the best extraction conditions and to obtain recovery yields suitable for industry are described below in detail and constitute some possible embodiments of the method and adducts according to the invention, provided for non-limiting illustrative purposes.

### Example 1: Preparation of the adduct [Me₂dazdt·2l₂]

The preparation of the reagent, the adduct of iodine with the cyclic dithioxamide N,N'-dimethyl-perhydrodiazepine-2,3-dithione ([Me₂dazdt·2l₂]), is in two phases as illustrated below.

### a) synthesis of the ligand

The synthesis of the ligand N,N'-dimethyl-perhydrodiazepine-2,3-dithione (Me₂dazdt), improved in relation to the product yields obtained, was performed as indicated in literature (R. Isaksson, T. Liljefors and J. Sandstrom, 1981 J. Chem. Research (M), 664-672).

The synthesis consists in preparation of the cyclic dioxamide (IV) by reaction between N,N'-dimethyl-propandiamine (II) and dimethyl oxalate (III) in the conditions illustrated in diagram 1: 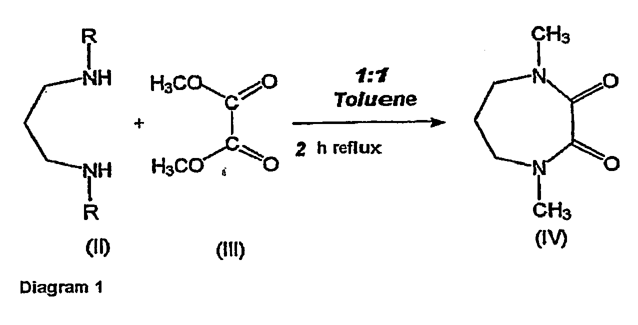 and subsequent sulphuration of the same (IV) with Lawesson's reagent (V) (diagram 2):

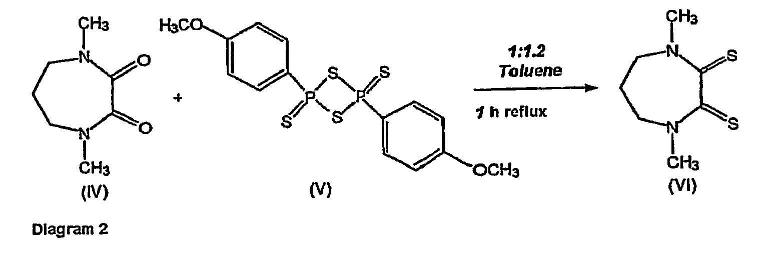

The product obtained (VI) is then purified by recrystallising it from CH₂Cl₂ and ethanol (by evaporation of the first in the presence of the second).

### b) synthesis of the adduct [Me₂dazdt·2l₂]

The synthesis of its adduct with iodine [Me₂dazdt·2l₂] was performed as illustrated in literature (Bigoli F. et al. 1998 ref. cit), and consists in the reaction, at room temperature and under stirring, between the ligand and the iodine (molar ratio 1:2) in a CHCl₃ solution, with instantaneous precipitation of the product (Diagram 3) subsequently washed with petroleum ether (40-60°C).

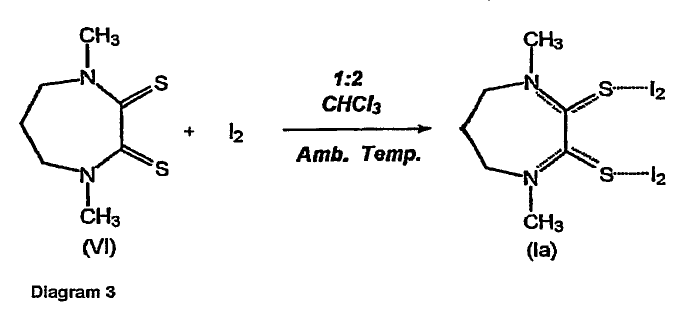

### Example 2: Synthesis of the adduct [Me₂dazdt·2lCl]

100 mg of Me₂dazdt (prepared as described in example 1) and 17 mg of lCl (molar ratio 1:2) are separately dissolved in a small amount of mixed solvent CH₂Cl₂/CHCl₃ (50/50) (recommended solvent volume: 100 mL in total). The interhalogen solution is added slowly to the ligand solution under stirring. The colour of the ligand solution turns from yellow to red-brown due to addition of the interhalogen. After a few minutes the precipitation of a brick red product is observed. The precipitate, characterised as [Me₂dazdt·2lCl], is recovered (yield: 50%) by removing the mother liquid and then washed with petroleum ether (40/60°C).

Analogously to the [Me₂dazdt.2l₂], also this adduct has shown dissolution capabilities vis-à-vis of the metallic gold (quantitative dissolution of 18.1 mg of gold in powder form in approx. three hours, molar ratio 2:1, solvent THF, room temperature).

### Example 3: synthesis of the adduct [Et₂dazdt·2l₂]

50 mg of Et₂dazdt (prepared according to C.-T. Chen et al., J. Chin. Chem. Soc., 49, 805, 2002) and 124 mg of I₂ (slight excess with respect to the molar ratio 1:2) are separately dissolved in CHCl₃ (recommend volume of solvent 50 mL in total). The halogen solution is added slowly to the ligand solution under constant stirring. The colour of the ligand solution turns from yellow to red-brown due to addition of the halogen. The clear solution is concentrated and left to crystallise by slow diffusion of petroleum ether (40/60°C). After a few hours extensive crystallisation of the product is observed in the form of regular hexagonal prisms which are separated from the mother liquid and washed with petroleum ether (40/60°C). Almost quantitative product recovery yield.

Cited adduct showed dissolution capacity vis-à-vis the metallic palladium (quantitative dissolution of 3.8 mg of palladium in powder form, molar ratio 2:1, solvent MEK, room temperature). The reaction product was completely characterised as [Pd(Et₂dazdt)l₂].

### Example 4: Preparation and characterisation of model catalysts

The model catalysts were prepared to simulate the typical compositions of the commercial catalysts and in particular containing palladium in the range of 0.5 - 3.0% in weight supported on Al₂O₃ or Ce_{0.6}Zr_{0.4}O₂ (10% in weight)/Al₂O₃, and subsequently subjected to accelerated thermal ageing. Having prepared the wash-coat by impregnation of the alumina (a commercial delta alumina) with a solution of ceria/zirconia citrate (R. Di Monte, P. Fornasiero, J. Kaspar, M. Graziani, J. M. Gatica, S. Bernal and A. Gómez-Herrero, Chem. Commun., 2167, 2000) with subsequent drying at 120°C for one night and calcination at 500°C for 5 h, the palladium was deposited by means of the "incipient wetness" technique using an aqueous solution of palladium nitrate. Subsequently the material was dried at 120°C for one night and then calcinated at 500 °C for 5 h. The samples thus obtained then underwent an extreme ageing cycle (200 hours at 1050°C in air) in order to simulate the stress conditions of the real catalysts in a catalytic converter.

In this way three types of model catalysts C1, C2 and C3 were obtained with the characteristics given in table 1.

**Table 1 Characteristics of the model catalysts**

| Sample | Palladium content (weight %) | Composition of the wash-coat |
|---|---|---|
| **C1** | 2.8 | Ce_{0.6}Zr_{0.4}O₂(10%)/Al₂O₃ |
| **C2** | 0.7 | Ce_{0.6}Zr_{0.4}O₂(10%)/Al₂O₃ |
| **C3** | 0.7 | Al₂O₃ |

Cited model catalysts reproduce the typical composition of the active phase (noble metal and wash-coat) of real catalysts in a catalytic converter. The latter also provide for the presence of a ceramic monolith (cordierite or others) with an internal honeycomb structure on which a layer (wash-coat) is deposited, generally of Al₂O₃ (in the 80s) or CeO₂-ZrO₂/Al₂O₃ (from the beginning of the 90s), and the noble metals (Pd, Pt and Rh) in variable proportions as mentioned previously.

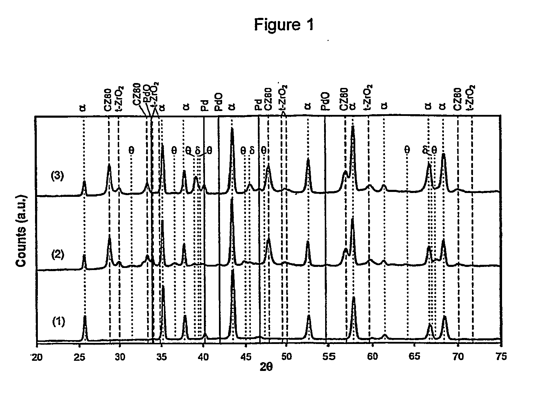

The characterisation of the samples thus obtained highlighted how accelerated ageing produces extensive sintering of the catalyst (the surface area is reduced from 100 to approx. 10 m²/g, Table 2), a phase transition from the form δ to α of the alumina, and a phase segregation of the solid solution of Ce_{0.6}Zr_{0.4}O₂ into two phases rich in CeO₂ and ZrO₂ respectively. It was also observed that the thermal ageing protocol produces an increase in the dimensions of the palladium particles. In fact, while in all the non-aged samples the X-ray diffraction does not highlight the presence of metallic Pd or palladium oxides, indicating a high dispersion of the active phase on the various supports, in the case of aged C1 the presence of crystallites of metallic Pd is observed with dimensions of approximately 20 nm, in the case of aged C2 the presence of crystallites of PdO is observed with dimensions between 10-15 nm, and in the case of aged C3 the presence of crystallites of metallic Pd is observed with dimensions between 15-20 nm. The data confirm the strong interaction of the palladium with the solid solution based on ceria and zirconia, the stabilisation role of the metallic dispersion and the oxidising capacity of the same which influences the oxidisation state of the palladium. Figure 1 shows the X-ray powder diffraction spectra of the three model catalysts which indicate that the model samples effectively imitate the real spent systems.

**Table 2: Characterisation of the model catalysts**

| Sample | Calcinated 500°C x 5h | | | Calcinated 1050°C x 200h | | |
|---|---|---|---|---|---|---|
| | Surface area (m² g⁻¹) | Volume of pores (mL g⁻¹) | Mean diameter of pores (nm) | Surface area (m² g⁻¹) | Volume of pores (mLg⁻¹) | Mean diameter of pores (nm) |
| C1 | 102 | 0.372 | 13.5 | 7 | 0.012 | 28.1 |
| C2 | 100 | 0.316 | 11.5 | 18 | 0.104 | 27.4 |
| C3 | 98 | 0.303 | 11.1 | 10 | 0.043 | 28.2 |

### Example 5: Grinding of ceramic type monolith of catalytic converters

In order to extract the noble metals, real ceramic type monoliths of catalytic converters were reduced to a fine powder form by means of simple grinding processes either manually or preferably in a tungsten carbide mortar (the monolith of real catalytic converters is very crumbly); after a few minutes a fine powder was obtained with granulometry of less than 180 microns.

### Example 6: Extraction of the palladium from the ceramic support and separation of the extract from the powder of the support

### 6. 1. Extraction of the palladium on model catalysts

The catalyst powder obtained from the preparation phase was stirred in the presence an organic solution of [Me₂dazdt·2l₂] slightly exceeding the molar ratio 2:1 between the reagent and the nominal palladium content in the weighed quantity of catalyst. Subsequently, the heterogeneous mixture was transferred to a glass microfibre thimble with low porosity (pore diameter 0.8 µm; the used catalyst powder is generally very fine and not filtered by more porous supports) inside a Soxhlet extractor, in which the powder and the solution are separated and the powder is washed by solvent reflux.

Numerous experiments were performed using different solvents (acetone, methyl ethyl ketone (MEK), tetrahydrofuran and acetonitrile), concentrations (1.1·10⁻³, 2·10⁻³, 2.5·10⁻³ M), extraction times (72, 120, 168 hours) and temperatures (room temperature and reflux temperature of the solvent: 80°C for MEK and acetonitrile). Some results obtained in the different extraction conditions are given in the following (Table 3).

**Table 3: Pd-extraction in the different conditions**

| Sample | Reag. conc. | Solvent | Temperature °C | Time hours | Extraction yield (%) |
|---|---|---|---|---|---|
| C1 | 2.5·10⁻³ | MEK | 80 | 168 | **99** |
| C1 | 2.5·10⁻³ | MEK | room | 168 | **94** |
| C1 | 2.5·10⁻³ | CH₃CN | 80 | 120 | **88** |
| C1 | 2·10⁻³ | CH₃CN | 80 | 120 | **85** |
| C1 | 1.1·10⁻³ | CH₃CN | 80 | 72 | **53** |
| C2 | 2.5·10⁻³ | MEK | 80 | 168 | **92** |
| C2 | 2.5·10⁻³ | CH₃CN | 80 | 120 | **53** |
| C2 | 2·10⁻³ | CH₃CN | 80 | 72 | **47** |
| C3 | 2.5·10⁻³ | MEK | 80 | 168 | **90** |
| C3 | 2.5·10⁻³ | CH₃CN | 80 | 120 | **56** |
| C3 | 2·10⁻³ | CH₃CN | 80 | 72 | **55** |

It was therefore found that, for a reagent concentration equal to 2.5·10⁻³ M in the presence of an appropriate quantity of catalyst containing 6 mg of metal, the best extraction results are obtained by performing the reaction for approximately 168 hours at the reflux temperature of the solvent. Among the different solvents, MEK was overall the best in terms of solubilisation of reagent and products, boiling point (80°C), inexpensiveness, environmental impact and ease of handling. In any case, it is not necessary to use particularly pure solvents.

The experiments on the sample of model catalyst with a higher palladium content (C1 2.8%) at room temperature provided an extraction yield of 94% (as against 99% obtained extracting at 80°C). This result is interesting considering that the reduction in the extraction yield could be balanced by a simplification in the extraction procedure and/or by the reduction in process costs (heating, albeit mild, produces an energy cost which is added to that of the other process phases).

An extraction test via use of the mixture I₂/I⁻ proposed in literature to dissolve noble metals such as Au, Ag, Pd (Y. Nakao, K. Sone, Chem. Commun., 1765, 1997) was performed on the catalyst C1, obtaining in the same conditions as described above an extraction yield of 11%. This result highlights the influence of the complexing capacity of the bidentate ligand contained in the reagent on the dissolution efficiency a nd the advantage of the same.

### 6.2 Extraction of the palladium from real catalytic converters

The experiments on the powder of a monolith of a real catalytic converters were performed as previously described for the model catalysts and the materials were taken from a catalytic converter of a motor vehicle that had clocked 15,000 km in built-up areas and along open roads.

### 6.2.9 Extraction of the palladium from a monolith of a real catalytic converters: rough manual grinding (particle diameter 180<d<425µm)

The results of the palladium extraction from cited catalytic converters, using [Me₂dazdt·2l₂] in MEK (2.5·10⁻³M, a slight excess with respect to the molar ratio 2:1, at the reflux temperature of the solvent and under agitation for 168 hours) on a portion of the monolith of real catalytic converters cited above, provided an extraction yield of 66%, most certainly significant considering the granulometry of the sample (ground roughly by hand; particle diameter 180<d<425µm) and the low palladium content percentage (0.077%, from quantitative analysis performed by acid breakdown of the monolith).

### 6.2.2 Extraction of the palladium from a monolith of a real catalytic converters: fine manual grinding (particle diameter <180µm)

The results of extraction of the palladium from cited catalytic converters, using [Me₂dazdt·2l₂] in MEK (2.5·10⁻³M, molar ratio 10:1, at the reflux temperature of the solvent and under agitation for 168 hours) on a portion of the real monolith of a catalytic converters in question with 0.107% palladium content (from quantitative analysis performed by acid breakdown of the monolith), provided a very good extraction yield of 89%.

### 6.2.3 Extraction of the palladium from the monolith of a catalytic converters: grinding in tungsten mortar.

The result of extraction of the palladium from cited catalytic converters, using [Me₂dazdt·2l₂] in MEK (2.5·10⁻³M, molar ratio 4:1, at the reflux temperature of the solvent and under agitation for 168 hours) on a portion of the real catalyst with a 0.241% palladium content (from quantitative analysis performed by acid breakdown of the monolith), provided an extraction yield of 80%.

### Example 7: Recovery of metallic palladium from the complex with the adduct by heat treatment

### 7. 1 in static air

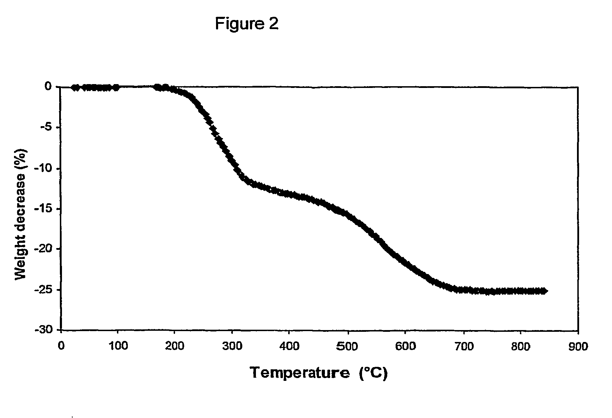

28.6 mg of Pd(Me₂dazdt)₂l₆ complex were placed in a crucible made of refractory material inside a thermobalance. The sample was then heated with a linear temperature gradient of 10°/min from ambient temperature to 850°C. A progressive weight loss was observed from 185°C upwards and was practically complete at 700°C (Figure 2). The overall weight loss indicated the formation of metallic Pd as did the X-ray micro-diffraction on the product obtained.

### 7.2 in an air flow

28.8 mg of Pd(Me₂dazdt)₂l₆ complex were placed in a crucible of refractory material inside a thermobalance with an air flow of 2NUh. The sample was then heated with a linear temperature gradient of 10°/min from ambient temperature to 1200°C. A progressive weight loss was observed from 165°C which was practically complete at 625°C. The presence of an air flow favoured thermal decomposition of the complex at temperatures slightly below those in stationary conditions. The overall weight loss indicated the formation of metallic Pd as did the X-ray micro-diffraction on the product obtained.

### Example 8: Recovery of the metal in the elementary state from the extract by copper treatment

The reduction reaction with copper consists in stirring the Pd(Me₂dazdt)₂l₆ solution at room temperature, in MEK or CH₃CN, with copper powder or wire exceeding the molar ratio Cu/Pd 1:1. The reaction produces a rapid (the time depends on the surface area of the copper used) and quantitative precipitation of the metallic palladium together with precipitation of a copper complex. Separation of the metal/copper complex was by simple dissolution of the complex in acetone. This method is particularly interesting because the ligand (Me₂dazdt=N,N'-dimethyl-perhydrodiazepin-2,3-dithione), which complexes the copper, is not affected by the reaction. This offers the possibility of a reagent recovery in order to reduce the process costs.

### Example 9: Recovery of the metal in the elementary state from the extract by treatment with gaseous hydrogen in the presence of metallic Pt as catalyst

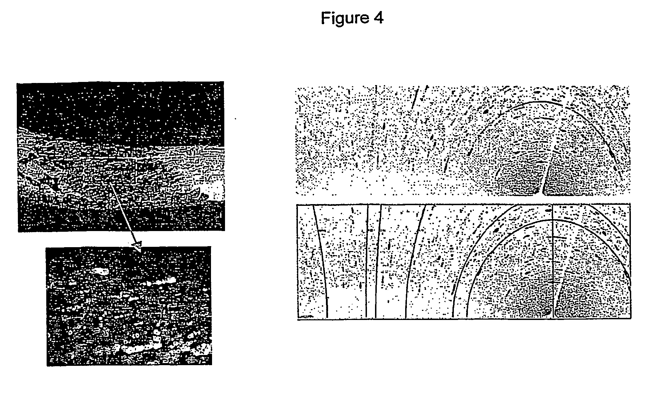

88 mg of Pd(Me₂dazdt)₂l₆ complex were dissolved in 65 mL of CH₃CN and placed in an autoclave with overall volume of 125 mL together with a platinum wire emerging from the solution, as catalyst for reduction of the palladium. After deaerating the autoclave for 5 minutes with a flow of Argon 20 mL/min STP, the same was loaded with H₂ at a pressure of 10 atm. Everything was heated at 80°C for 3 days. On the Pt wire a deposit of metallic Pd formed (figure 4 A) clearly visible by X-ray (figure 4 B).

### Example10: Recovery of the metal in the elementary state from the extract by treatment with hydrazine

80 mg of Pd(Me₂dazdt)₂l₆ complex were dissolved in 50 mL of CH₃CN. 1 mL of hydrazine at ambient temperature was added to the solution under stirring. The formation of a spongy precipitate was observed consisting of metallic palladium as shown by diffraction spectra obtained on the material after filtering.

Although in the experimental part the method of the invention is applied to a catalyst of a catalytic converter consisting in a ceramic monolith, the treatment of a catalyst of a monolith type of which the honeycomb (support) is not ceramic material but of a metal or metal alloys is also possible and therefore the same is in the scope of the present invention. For the purpose it is sufficient to extract the wash-coat from the support using for example mechanical means and then treat the materials according to the method of the invention.

The method object of the invention has undoubted advantages with respect to the known techniques of pyrometallurgical chlorination, dissolution with strong acids and oxidants, dissolution with alkaline solutions.

With respect to pyrometallurgical chlorination, the method object of the invention is just as effective but less polluting and less hazardous for the operators (it uses non-cytotoxic reagents and non-aggressive solvents), is performed in mild conditions (ambient temperature or maximum 80°C) and does not require reactors or complex equipment.

With respect to dissolution with strong acids and oxidants, with the method described roughly quantitative extraction of the metal is obtained in one single stage avoiding laborious processes of separation of the metals (the reagent is capable of oxidising and simultaneously selectively "sequestering" the metal, processes performed with acid and ligand respectively in dissolution with acids) and using non-polluting reagents which can be easily handled by the operators.

Lastly, with respect to dissolution with alkaline solutions, the method object of the invention adopts a considerably simpler procedure and uses non-hazardous reagents.

## Claims

1. Method for palladium recovery **characterised in that** said palladium is dissolved and extracted with adducts of N,N'-dialkyl-perhydrodiazepine-2,3-dithione of formula (I)
[R,R'dazdt·nXY] (I)
wherein:
R and R' equal to or different from each other are alkyl groups;
XY is a group where X and Y can be equal to each other and are halogens or XY is a group where X and Y can be different from each other and are interhalogens
n is equal to 1 or 2.

2. Method as claimed in claim 1 wherein in the adducts of formula (I) R and R' are short-chain alkyl groups.

3. Method as claimed in claim 1 wherein in the adducts of formula (I) R and R' are equal and are methyl or ethyl groups.

4. Method as claimed in claim 1 wherein in the adducts of formula (I) XY are selected from the group consisting of I₂, IBr, ICI, Br₂.

5. Method as claimed in claim 1 in which in the adducts of formula (I) R and R' are methyl or ethyl groups and XY is I₂.

6. Method as claimed in claim 1 wherein the adducts of formula (I) are solubilised in concentrations of at least 1.0·10⁻³ M in organic solvents.

7. Method as claimed in claim 6 wherein the organic solvents are selected from the group consisting of acetone, methyl ethyl ketone, tetrahydrofuran and acetonitrile.

8. Method as claimed in claim 1 wherein the extraction is performed in a molar ratio between the nominal content of palladium and adducts of formula (I) of at least 1 :2.

9. Method as claimed in claim 1 wherein the extraction is performed at room temperature.

10. Method as claimed in claim 1 wherein the extraction is performed at the reflux temperature of the organic solvent used for solubilisation of a selected adduct of formula (I).

11. Method as claimed in claims 9 and 10 wherein the extraction is performed for at least 72 hours.

12. Method as claimed in claim 1 wherein the palladium is dissolved and extracted from powders of granulometry with diameter not exceeding 180µm.

13. Method as claimed in claim 1 wherein the solution containing the palladium extracted in form of complex with a selected adduct of formula (I) is separated.

14. Method as claimed in claim 1 wherein the palladium extracted in form of complex with a selected adduct of formula (I) is treated for its recovery in metallic form.

15. Method as claimed in claim 14 wherein this recovery is obtainable by distillation and thermally treating the solid residue at temperatures below 600°C.

16. Method as claimed in claim 14 wherein this recovery of the palladium complex with a selected adduct of formula (I) is obtainable by reduction.

17. Adducts of N,N'-dialkyl-perhydrodiazepine-2,3-dithione of formula (I)
[R,R'dazdt.nXY] (I)
wherein:
R and R' equal to or different from each other are alkyl groups;
XY is a group where X and Y are equal to each other and are halogens or XY is a group where X and Y are different from each other and are interhalogens
with the proviso that when R and R' are equal to each other and are methyl groups XY is different from I₂ with n equal to 2 and from IBr with n equal to 1 or 2.

18. Adducts as claimed in claim 17 wherein R and R' are short-chain alkyl groups, different from methyl when XY is equal to I₂ with n equal to 2 and to IBr with n equal to 1 or 2, and XY are halogens or interhalogens selected from the group consisting of I₂, IBr, ICI, Br₂.

19. Use of adducts of N,N'-dialkyl-perhydrodiazepine-2,3-dithione of formula (I)
[R,R'dazdt·nXY] (I)
wherein :
R and R' equal to or different from each other are alkyl groups;
XY is a group where X and Y are equal to each other and are halogens or XY is a group where X and Y are different from each other and are interhalogens
n is equal to 1 or 2
as reagents for noble metals complexation with the proviso that this metal is different from gold in the case of adducts in which R and R' equal to each other are methyl groups and XY is I₂ with n equal to 2 and IBr with n equal to 1 or 2.

20. Use as claimed in claim 19 wherein in the adducts of formula (I) R and R' are methyl or ethyl groups and XY is I₂.

## Patentansprüche

1. Verfahren zur Palladium-Rückgewinnung, **dadurch gekennzeichnet, dass** das Palladium gelöst und mit Addukten von N,N'-Dialkyl-perhydrodiazepin-2,3-dithion der Formel (I) extrahiert wird
[R,R'dazdt·nXY] (I)
worin:
R und R', die gleich oder verschieden voneinander sind, Alkylgruppen sind;
XY eine Gruppe ist, in der X und Y gleich sein können und Halogene sind, oder XY eine Gruppe ist, in der X und
Y verschieden voneinander sein können und Interhalogene sind,
n 1 oder 2 ist.

2. Verfahren gemäß Anspruch 1, worin in den Addukten der Formel (I) R und R' kurzkettige Alkylgruppen sind.

3. Verfahren gemäß Anspruch 1, worin in den Addukten der Formel (I) R und R' gleich sind und Methyl- oder Ethylgruppen sind.

4. Verfahren gemäß Anspruch 1, worin in den Addukten der Formel (I) XY aus der Gruppe ausgewählt werden, die aus I₂, IBr, ICl, Br₂ besteht.

5. Verfahren gemäß Anspruch 1, worin in den Addukten der Formel (I) R und R' Methyl- oder Ethylgruppen sind und XY I₂ ist.

6. Verfahren gemäß Anspruch 1, worin die Addukte der Formel (I) in einer Konzentration von mindestens 1,0·10⁻³ M in organischen Lösungsmitteln gelöst werden.

7. Verfahren gemäß Anspruch 6, worin die organischen Lösungsmittel aus der Gruppe ausgewählt werden, die aus Aceton, Methylethylketon, Tetrahydrofuran und Acetonitril besteht.

8. Verfahren gemäß Anspruch 1, worin die Extraktion bei einem Molverhältnis des nominalen Gehalts an Palladium und den Addukten der Formel (I) von mindestens 1:2 durchgeführt wird.

9. Verfahren gemäß Anspruch 1, worin die Extraktion bei Raumtemperatur durchgeführt wird.

10. Verfahren gemäß Anspruch 1, worin die Extraktion bei der Rückflusstemperatur des organischen Lösungsmittels durchgeführt wird, das zur Solubilisation des ausgewählten Addukts der Formel (I) verwendet wird.

11. Verfahren gemäß den Ansprüchen 9 und 10, worin die Extraktion für mindestens 72 Stunden durchgeführt wird.

12. Verfahren gemäß Anspruch 1, worin das Palladium aus Pulvern mit einer Korngrößenverteilung mit einem Durchmesser, der 180 µm nicht übersteigt, gelöst und extrahiert wird.

13. Verfahren gemäß Anspruch 1, worin die Lösung, die das Palladium enthält, das in Form eines Komplexes mit einem ausgewählten Addukt der Formel (I) extrahiert wird, abgetrennt wird.

14. Verfahren gemäß Anspruch 1, worin das Palladium, das in Form eines Komplexes mit einem ausgewählten Addukt der Formel (I) extrahiert wird, zu seiner Rückgewinnung in metallischer Form behandelt wird.

15. Verfahren gemäß Anspruch 14, worin diese Rückgewinnung durch Destillation und thermisches Behandeln des festen Rückstands bei Temperaturen unterhalb von 600°C erhältlich ist.

16. Verfahren gemäß Anspruch 14, worin diese Rückgewinnung des Palladiumkomplexes mit einem ausgewählten Addukt der Formel (I) durch Reduktion erhältlich ist.

17. Addukte von N,N'-Dialkyl-perhydrodiazepin-2,3-thion der Formel (I)
[R,R'dazdt·nXY] (I)
worin:
R und R', die gleich oder verschieden voneinander sind, Alkylgruppen sind;
XY eine Gruppe ist, in der X und Y gleich sind und Halogene sind, oder
XY eine Gruppe ist, in der X und Y verschieden voneinander sind und Interhalogene sind,
unter der Maßgabe, dass, wenn R und R' gleich sind und Methylgruppen sind, XY von I₂ verschieden ist, wenn n 2 ist, und von IBr verschieden ist, wenn n 1 oder 2 ist.

18. Addukte gemäß Anspruch 17, worin R und R' von Methyl verschiedene kurzkettige Alkylgruppen sind, wenn XY I₂ ist, wobei n 2 ist, und IBr ist, wobei n 1 oder 2 ist, und XY Halogene oder Interhalogene sind, die aus der Gruppe ausgewählt werden, die aus I₂, IBr, ICl, Br₂ besteht.

19. Verwendung der Addukte von N,N'-Dialkyl-perhydrodiazepin-2,3-dithion der Formel (I)
[R,R' dazdt·nXY] (I)
worin:
R und R', die gleich oder verschieden voneinander sind, Alkylgruppen sind;
XY eine Gruppe ist, in der X und Y gleich sind und Halogene sind, oder
XY eine Gruppe ist, in der X und Y verschieden sind und Interhalogene sind,
n 1 oder 2 ist,
als Reagentien zur Edelmetallkomplexierung, unter der Maßgabe, dass im Falle von Addukten, in denen R und R' gleich sind und Methylgruppen sind und XY I₂ ist, wobei n 2 ist, und IBr ist, wobei n 1 oder 2 ist, dieses Metall von Gold verschieden ist.

20. Verwendung gemäß Anspruch 19, worin in den Addukten der Formel (I) R und R' Methyl- oder Ethylgruppen sind und XY I₂ ist.

## Revendications

1. Procédé de récupération du palladium **caractérisé en ce que** ledit palladium est dissous et extrait avec des produits d'addition de N,N'-dialkyl-perhydrodiazépine-2,3-dithione de formule (I)
[R,R'dazdt-nXY] (I)
dans laquelle :
R et R', identiques ou différents, sont des groupes alkyle ;
XY est un groupe où X et Y peuvent être identiques et sont des atomes d'halogène ;
ou bien XY est un groupe où X et Y peuvent être différents et sont des interhalogènes ;
n est égal à 1 ou 2.

2. Procédé selon la revendication 1, dans lequel dans les produits d'addition de formule (I), R et R' sont des groupes alkyle à chaîne courte.

3. Procédé selon la revendication 1, dans lequel dans les produits d'addition de formule (I), R et R' sont égaux et sont des groupes méthyle ou éthyle.

4. Procédé selon la revendication 1, dans lequel dans les produits d'addition de formule (I), XY sont choisis dans le groupe constitué de I₂, IBr, ICI, Br₂.

5. Procédé selon la revendication 1, dans lequel dans les produits d'addition de formule (I), R et R' sont des groupes méthyle ou éthyle et XY est I₂.

6. Procédé selon la revendication 1, dans lequel les produits d'addition de formule (I), sont solubilisés à des concentrations d'au moins 1,0.10⁻³ M dans des solvants organiques.

7. Procédé selon la revendication 6, dans lequel les solvants organiques sont choisis dans le groupe constitué par l'acétone, la méthyl éthyl cétone, le tétrahydrofurane et l'acétonitrile.

8. Procédé selon la revendication 1, dans lequel l'extraction est réalisée en un rapport molaire entre la teneur nominale de palladium et de produits d'addition de formule (I) d'au moins 1 : 2.

9. Procédé selon la revendication 1, dans lequel l'extraction est réalisée à température ambiante.

10. Procédé selon la revendication 1, dans lequel l'extraction est réalisée à la température de reflux du solvant organique utilisé pour la solubilisation d'un produit d'addition de formule (I) choisi.

11. Procédé selon les revendications 9 et 10, dans lequel l'extraction est réalisée pendant au moins 72 heures.

12. Procédé selon la revendication 1, dans lequel le palladium est dissous et extrait de poudres de granulométrie avec un diamètre n'excédant pas 180 µm.

13. Procédé selon la revendication 1, dans lequel la solution contenant le palladium extrait sous forme de complexe avec un produit d'addition de formule (I) choisi est séparé.

14. Procédé selon la revendication 1, dans lequel le palladium extrait sous forme de complexe avec un produit d'addition de formule (I) choisi est traité pour être récupéré sous forme métallique.

15. Procédé selon la revendication 14, dans lequel cette récupération peut être obtenue par distillation et traitement thermique du résidu solide à des températures inférieures à 600 °C.

16. Procédé selon la revendication 14, dans lequel cette récupération du complexe de palladium avec un produit d'addition de formule (I) choisi peut être obtenue par réduction.

17. Produits d'addition de N,N'-dialkyl-perhydro-diazépine-2,3-dithione de formule (I)
[R,R'dazdt-nXY] (I)
dans laquelle:
R et R', identiques ou différents, sont des groupes alkyle ;
XY est un groupe où X et Y sont identiques et sont des atomes d'halogène ou bien
XY est un groupe où X et Y sont différents et sont des interhalogènes
à condition que lorsque R et R' sont identiques et sont des groupes méthyle XY est différent de I₂ avec n égal à 2 et de IBr avec n égal à 1 ou 2.

18. Produits d'addition selon la revendication 17, dans lesquels R et R' sont des groupes alkyle à chaîne courte, différents du groupe méthyle lorsque XY est égal à I₂ avec n égal à 2 et à IBr avec n égal à 1 ou 2, et XY sont des atomes d'halogène ou des interhalogènes choisis dans le groupe constitué de I₂, IBr, ICI, Br₂.

19. Utilisation de produits d'addition de N,N'-dialkyl-perhydrodiazépine-2,3-dithione de formule (I)
[R,R'dazdt-nXY] (I)
dans laquelle :
R et R', identiques ou différents, sont des groupes alkyle ;
XY est un groupe où X et Y sont identiques et sont des atomes d'halogène
ou bien XY est un groupe où X et Y sont différents et sont des interhalogènes
n est égal à 1 ou 2
en tant que réactifs pour une complexation de métaux nobles à la condition que ce métal soit différent de l'or dans le cas de produits d'addition dans lesquels R et R' qui sont identiques sont des groupes méthyle et XY est I₂ avec n égal à 2 et IBr avec n égal à 1 ou 2.

20. Utilisation selon la revendication 19, dans laquelle dans les produits d'addition de formule (I), R et R' sont des groupes méthyle ou éthyle et XY est I₂.
